# EUROPÄISCHE PATENTSCHRIFT

(11) **EP 0 441 179 B1**
(45) Veröffentlichungstag und Bekanntmachung des Hinweises auf die Patenterteilung: **13.04.1994**
(21) Anmeldenummer: 91100857.1
(22) Anmeldetag: 24.01.1991
(51) Int. Cl.: B60J 11/00

(54) **Scheibenabdeckung für Kraftfahrzeuge**
Window cover for motor vehicles
Housse pour vitre de véhicule

(30) Priorität: 03.02.1990 DE 4003226
(43) Veröffentlichungstag der Anmeldung: 14.08.1991
(73) Patentinhaber: Lehnhoff, Kurt Dipl.-Ing.,, D-61288 Bad Homburg (DE)
(72) Erfinder: Lehnhoff, Kurt Dipl.-Ing.,, D-61288 Bad Homburg (DE)
(74) Vertreter: Schieferdecker, Lutz, Dipl.-Ing.

(56) Entgegenhaltungen:
- WO-A-89/00930
- DE-A- 3 735 478
- DE-A- 3 806 810
- GB-A- 2 184 701
- US-A- 4 652 039

## Beschreibung

Die Erfindung betrifft eine Scheibenabdeckung für Kraftfahrzeuge mit einem an die Größe und an die Abmessungen der Scheibe angepaßten, flachen sowie faltbaren Teil aus Kunststoff, das mindestens einen vom scheibenwischerseitigen Rand ausgehenden Schlitz aufweist.

Scheibenabdeckungen der genannten Art sind z. B. aus der DE- A-3806810 bekannt. Die Befestigung dieser Scheibenabdeckung am Kraftfahrzeug erfolgt mit Hilfe von Haltemagneten. Hierzu ist die Scheibenabdeckung deutlich größer als die zu schützende Scheibe, da die Haltemagnete im Bereich von Blechteilen des Fahrzeuges liegen müssen mit der Folge, daß die Scheibenabdeckung jeweils randseitig über die Scheibe greift. Dies kann mit Hilfe von laschenförmigen Verlängerungsteilen oder mit Hilfe von Streifen geschehen, in die die Haltemagnete integriert sind.

Der jeweils vordere, motorseitige Rand dieser aus einer Kunststoff-Folie bestehenden Scheibenabdeckung kann darüberhinaus so gestaltet sein, daß auch die Spritzdüsen der Scheibenwaschanlage und vor der Windschutzscheibe befindliche Lüftungsschlitze überdeckt werden. Zu diesem Zweck weist die Scheibenabdeckung im Bereich ihres vorderen, motorseitigen Randes sich von außen nach innen verjüngende Schlitze zur Aufnahme der Scheibenwischerachsen auf. Hierdurch ist es möglich, die aus einer Kunststoff-Folie bestehende Scheibenabdeckung unter den Wischerblättern hindurchzuziehen und mit dem unteren Randstreifen auf angrenzende Blechteile des Fahrzeuges einschließlich dort befindlicher Lüftungsschlitze und Spritzdüsen zu legen, wobei die Scheibenabdeckung schlitzförmig die Scheibenwischerachsen umgreift.

Ferner ist aus der W0 89/00930 eine für Kraftfahrzeuge bestimmte Scheibenabdeckung bekannt, die aus einer flachen, faltbaren sowie dünnen Kunststoff-Doppelstegplatte besteht. Sie wird bei Bedarf unter die Scheibenwischerblätter geklemmt und kann zusätzlich mit Hilfe von kurzen Haltebändern an den Fahrzeugtüren gesichert werden.

Die Befestigung der bekannten, als Scheibenabdeckung dienenden Kunststoff-Folie an dem Kraftfahrzeug ist wegen der fehlenden Eigensteifigkeit der Folie außerordentlich problematisch und gemäß der DE-A-3806810 auch nur mit Hilfe von Magneten zu verwirklichen. Dies setzt ferner voraus, daß die Folie wesentlich größer ist als die zu schützende Scheibe. Im Falle der Verwendung einer Doppelstegplatte als Scheibenabdeckung - wie dies aus der W0 89/00930 bekannt ist - lassen sich die Scheibenwischer mit Hilfe der Scheibenabdeckung nicht schützen, da sie selbst zum Halten der Scheibenabdekkung dienen.

Der Erfindung liegt daher das Problem zugrunde, Maßnahmen vorzusehen, mit deren Hilfe es möglich ist, eine relativ steife und eigenstabile Scheibenabdeckung zu schaffen, die zugleich auch einen Schutz für die Wischerblätter bietet.

Zur Lösung dieser Aufgabe sieht die Erfindung mit den Merkmalen des kennzeichnenden Teiles des Anspruches 1 vor, daß die Lage des / der vom unteren Rand 5 der Scheibenabdeckung ausgehenden Schlitze so gewählt ist, daß die Scheibenabdekkung mit dem / den Schlitzen auf den bzw. auf die Scheibenwischerarme aufsteckbar ist.

Mit den besagten Merkmalen wird einerseits - wie bisher - die Scheibe geschützt und ferner wird auch ein Schutz für die Scheibenwischerblätter erzielt, obwohl die Scheibenwischer mit Ihren Scheibenwischerarmen die Scheibenabdekkung halten. Dabei genügt es, wenn der bzw. die Scheibenwischerarme gegebenenfalls nur teilweise auf der Scheibenabdeckung aufliegen. Es ist nicht notwendig, daß das oder die Scheibenwischerblätter großflächig auf der Scheibenabdeckung aufliegen, um eine sichere Halterung zu erzielen. Die Scheibenwischerblätter können daher unter der Scheibenabdeckung angeordnet sein, wenn die Wischerarme selbst erfindungsgemäß durch die Schlitze am unteren Rand der Scheibenabdeckung greifen, wobei es ferner in der überwiegenden Zahl der Fälle unproblematisch ist, wenn Teile des oder der Wischerarme ungeschützt bleiben. Die Verwendung von Schlitzen am unteren Rand der Scheibenabdeckung derart, daß die Scheibenabdeckung auf die Scheibenwischerarme aufsteckbar ist, erlaubt daher eine vorteilhafte Nutzung der Scheibenabdeckung unter Einbeziehung ihrer Schutzmöglichkeiten auch für das bzw. für die Scheibenwischerblätter.

Hinzu kommt noch, daß bei einer derartigen Verwendung die Scheibenabdeckung selbst in einem geringen Abstand von der Oberfläche der zu schützenden Scheibe gehalten wird, wodurch ein sich günstig auswirkendes Luftpolster zwischen Scheibe und Scheibenabdeckung geschaffen wird. Der Abstand verringert sich zwar bis zum dachseitigen Rand der Scheibenabdeckung, wo die Scheibenabdeckung auf der zu schützenden Scheibe etwa linienförmig aufliegt, doch bewirkt auch dies gegenüber den bekannten Scheibenabdekkungen noch günstige Verhältnisse.

Besondere Ausgestaltungen und Weiterbildungen der Erfindung gehen aus Unteransprüchen im Zusammenhang mit der Beschreibung und der Zeichnung hervor.

Die Erfindung wird nachstehend anhand eines Ausführungsbeispieles, das in der Zeichnung dargestellt ist, näher beschrieben. Dabei zeigen:
- Fig. 1: eine Ansicht der Scheibenabdeckung;
- Fig. 2: eine Draufsicht und
- Fig. 3: eine schematische Darstellung der Scheibenabdeckung in eingebautem Zustand sowie in perspektivischer Darstellung mit Teilen eines Kraftfahrzeuges.

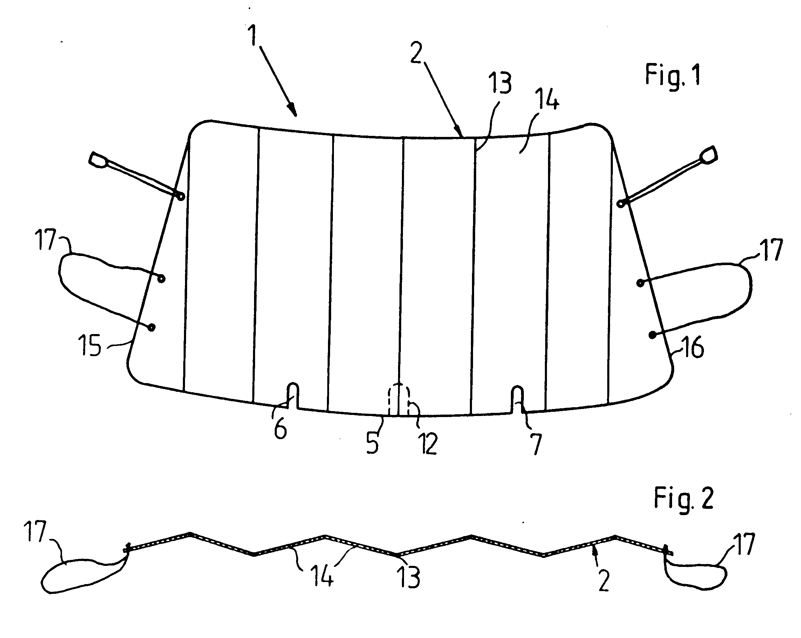

Eine Scheibenabdeckung 1 besteht gemäß Figur 1 aus einem an die Größe und die Abmessungen der abzudeckenden Scheibe angepassten, flachen sowie faltbaren Teil 2, das vorzugsweise eine dünne Kunststoff-Doppelstegplatte 2 ist. Sie weist zum Abdecken der Windschutzscheibe 3 eines Kraftfahrzeuges 4 entsprechend dessen Bauart mindestens einen vom unteren, scheibenwischerseitigen Rand 5 ausgehenden Schlitz 6 bzw. 7 auf. Diese Schlitze 6,7 erstrecken sich senkrecht zum Rand 5 und besitzen eine Länge, die größer ist als seine Breite. Die Lage der Schlitze 6 und 7 ist so gewählt, daß die Scheibenabdeckung 1 mit ihren Schlitzen 6,7 auf Teile des Antriebes des Scheibenwischers bzw. auf den oder die Scheibenwischerarme 8,9 aufgesteckt werden kann. Dadurch übergreift die Scheibenabdeckung 1 mit ihrem unteren Randbereich die Scheibenwischerblätter 10,11 und liegt dennoch unter Teilen der Scheibenwischerarme 8,9.

Da die Lage der Schlitze 6,7 von Kraftfahrzeug zu Kraftfahrzeug verschieden sein kann, ist es zweckmäßig, Sollbruchstellen 12 zum späteren Herausbrechen von Material zur Schlitzbildung vorzusehen.

Zur platzsparenden Aufbewahrung wird die Scheibenabdeckung zweckmässigerweise zickzackförmig zusammengelegt. Hierzu weist sie mehrere Falzlinien 13 auf, die streifenförmige Felder 14 ergeben.

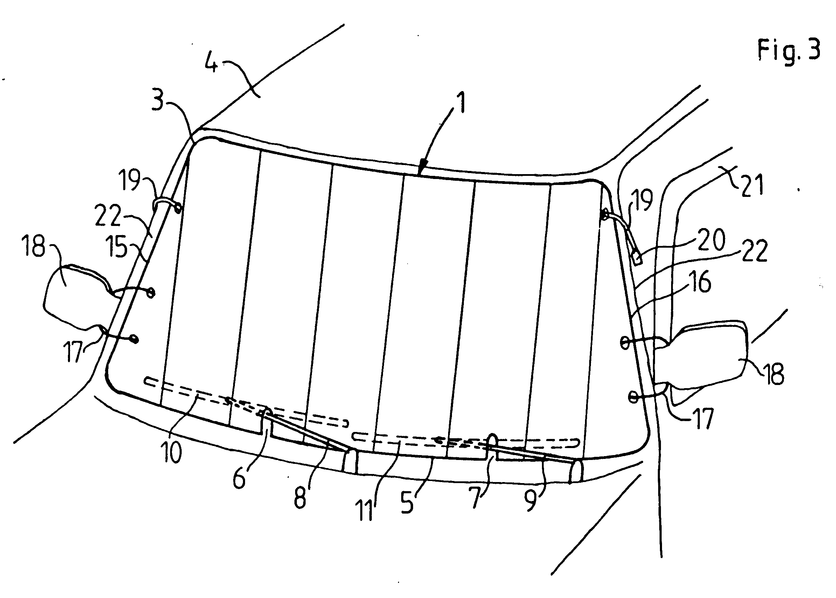

An beiden Schmalseiten 15 und 16 sind in der unteren Hälfte je eine Gummischlaufe 17 vorgesehen. Sie dienen zum Fixieren der Scheibenabdeckung 1 an den Außenspiegeln 18 des Kraftfahrzeuges 4, wie auch Figur 3 zeigt.

Ferner ist vorzugsweise an beiden Schmalseiten 15 und 16 der Scheibenabdeckung 1 in deren oberen Hälfte je ein Halteband 19 angeordnet, das mit seinem freien, verdickten Ende 20 zwischen die Kraftfahrzeugtür 21 und den Türrahmen 22 geklemmt wird. Eine sichere und auch Sturmböen standhaltende Befestigung ist hiermit gewährleistet.

Die Scheibenabdeckung 1 eignet sich nicht nur zum Schutz von Windschutzscheiben, sondern gleichermaßen auch für Fahrzeugheckscheiben. Schließlich kann sie auch als Sonnenschutz außen auf der Windschutzsscheibe und/oder außen auf einer Fahrzeugheckscheibe verwendet werden.

Sofern die Scheibenabdeckung 1 auf den bzw. die Scheibenwischerarme 8,9 aufgesteckt wird, verläuft sie mit ihrem unteren Rand 5 im Abstand zur Windschutzscheibe 3, liegt dort also nicht unmittelbar auf. Dies hat auch zur Folge, daß sich Eis nicht auf der Windschutzscheibe 3 bilden kann, auch wenn die Scheibenabdeckung 1 selbst auf ihrer Unterseite nass sein sollte.

## Patentansprüche

1. Scheibenabdeckung für Kraftfahrzeuge mit einem an die Größe und an die Abmessungen der Scheibe angepaßten, flachen sowie faltbaren Teil (2) aus Kunststoff, das mindestens einen, vom scheibenwischerseitigen Rand (5) ausgehenden Schlitz (6 bzw. 7) aufweist, dadurch gekennzeichnet, daß die Lage des / der vom unteren Rand (5) ausgehenden Schlitze (6 bzw. 7) so gewählt ist, daß die Scheibenabdeckung (1) mit dem / den Schlitzen (6 bzw. 7) auf den bzw. auf die Scheibenwischerarme (8, 9) aufsteckbar ist.

2. Scheibenabdeckung nach Anspruch 1, dadurch gekennzeichnet, daß sich der Schlitz (6,7) senkrecht zum Rand (5) erstreckt und eine Länge besitzt, die größer ist als seine Breite.

3. Scheibenabdeckung nach Anspruch 1 und 2, dadurch gekennzeichnet, daß zwei Schlitze (6,7) vorgesehen sind.

4. Scheibenabdeckung nach einem der vorhergehenden Ansprüche, dadurch gekennzeichnet, daß Sollbruchstellen (12) für den bzw. die Schlitze (6,7) vorgesehen sind.

5. Scheibenabdeckung nach einem der vorhergehenden Ansprüche 1 - 4, gekennzeichnet durch mehrere Falzlinien (13) für sechs bis acht längliche Felder (14) zum kleinformatigen Zusammenlegen.

6. Scheibenabdeckung nach einem der vorhergehenden Ansprüche 1 - 5, dadurch gekennzeichnet, daß an beiden Schmalseiten (15,16) in der unteren Hälfte je eine Gummischlaufe (17) vorgesehen ist.

7. Scheibenabdeckung nach einem der vorhergehenden Ansprüche, dadurch gekennzeichnet, daß an beiden Schmalseiten (15,16) in der oberen Hälfte je ein Halteband (13) und in der unteren Hälfte je eine Gummischlaufe (17) vorgesehen sind.

8. Scheibenabdeckung nach einem der vorhergehenden Ansprüche, gekennzeichnet durch seine Verwendung auf einer Fahrzeugheckscheibe.

9. Scheibenabdeckung nach einem der vorhergehenden Ansprüche, gekennzeichnet durch ihre Verwendung als Sonnenchutz außen auf der Windschutzscheibe und/oder außen auf der Fahrzeugheckscheibe.

10. Scheibenabdeckung nach einem der vorhergehenden Ansprüche, dadurch gekennzeichnet, daß als Werkstoff eine flache, faltbare sowie dünne Doppelstegplatte aus Kunststoff verwendet wird.

## Claims

1. A screen covering for motor vehicles, having a flat and foldable part (2) made of plastics material and arranged to fit the size and dimensions of the screen, and having at least one slit (6 or 7) which emanates from the edge (5) at the side of the screen washer, characterised in that the position of the slot(s) (6 or 7) emanating from the bottom edge (5) is selected in such a way that the screen covering (1) with the slot(s) (6, 7) can be placed over the screen wiper arms (8, 9).

2. A screen covering according to Claim 1, characterised in that the slit (6, 7) extends vertically to the edge (5) and is greater in length than in width.

3. A screen covering according to Claim 1 and Claim 2, characterised in that two slots (6, 7) are provided.

4. A screen covering according to one of the preceding claims, characterised in that nominal breakage points (12) are provided for the slot(s) (6, 7).

5. A screen covering according to one of the preceding claims 1 - 4, characterised by a plurality of fold lines (13) for six to eight elongate zones (14) for folding it to a small format.

6. A screen covering according to one of the preceding Claims 1 - 5, characterised in that a rubber strap (17) is provided on the lower half of each of the two narrow sides (15, 16).

7. A screen covering according to one of the preceding Claims, characterised in that a holding strip (13) is provided in the upper half of both narrow sides (15, 16) and a rubber strap (17) is provided in the lower half.

8. A screen covering according to one of the preceding claims, characterised by its use on a rear windscreen of a motor vehicle.

9. A screen covering according to one of the preceding claims, characterised by its use as a means of protection from the sun on the outside of the windscreen and/or on the outside of the rear windscreen of a motor vehicle.

10. A screen covering according to one of the preceding claims, characterised in that the material used is a flat, foldable and thin double webbed panel made of plastics material.

## Revendications

1. Housse pour vitre de véhicule avec une partie (2), en matière plastique, pliable adaptée à la grandeur et aux dimensions de la vitre, partie qui présente au moins une fente (6 resp. 7) partant depuis le bord (5) qui se trouve du côté des essuie-glaces, caractérisée en ce que la situation de la / des fente(s) (6 resp. 7) partant du bord inférieur (5) est choisie de manière à ce que la housse (1) pour vitres puisse être enfilée sur les bras des essuie-glaces (8, 9) par l'intermédiaire de la (des) fente(s) (6 resp. 7).

2. Housse pour vitre selon la revendication 1, caractérisée en ce que la fente (6, 7) s'étend perpendiculairement au bord (5) et présente une longueur qui est supérieure à sa largeur.

3. Housse pour vitre selon la revendication 1 et 2, caractérisée en ce qu'il est prévu deux fentes (6, 7).

4. Housse pour vitre selon l'une des revendications précédentes, caractérisée en ce qu'il est prévu des points de rupture théoriques (12) pour la resp. les fente(s) (6, 7).

5. Housse pour vitre selon l'une des revendications précédentes 1 - 4, caractérisée par plusieurs lignes de pliage (13) pour six à huit zones allongées (14) en vue d'un assemblage en petit format.

6. Housse pour vitre selon l'une des revendications précédentes 1 - 5, caractérisée en ce qu'il est prévu aux deux côtés étroits (15, 16), dans la moitié inférieure, à chaque fois une boucle de caoutchouc (17).

7. Housse pour vitre selon l'une des revendications précédentes, caractérisée en ce qu'il est prévu aux deux côtés étroits (15, 16), dans la moitié supérieure, à chaque fois une attache (19) et, dans la moitié inférieure, à chaque fois une boucle de caoutchouc (17).

8. Housse pour vitre selon l'une des revendications précédentes, caractérisée par son utilisation sur une lunette arrière de voiture automobile.

9. Housse pour vitre selon l'une des revendications précédentes, caractérisée par son utilisation comme protection contre le soleil à l'extérieur sur le pare-brise et/ou à l'extérieur sur la lunette arrière de voiture automobile.

10. Housse pour vitre selon l'une des revendications précédentes, caractérisée en ce que, comme matière, il est employé une plaque à nervures doubles, plate, pliable et mince en matière plastique.
